(19) Europäisches Patentamt

European Patent Office

Office européen des brevets

(11) EP 0 955 089 A1

## (12) DEMANDE DE BREVET EUROPEEN

(43) Date de publication:
10.11.1999 Bulletin 1999/45

(51) Int Cl.6: **B01J 23/38**, B01J 23/68, C10G 49/06, C10G 45/52

(21) Numéro de dépôt: 99401021.3

(22) Date de dépôt: 26.04.1999

(84) Etats contractants désignés:
AT BE CH CY DE DK ES FI FR GB GR IE IT LI LU MC NL PT SE
Etats d'extension désignés:
AL LT LV MK RO SI

(30) Priorité: 07.05.1998 FR 9805846

(71) Demandeur: INSTITUT FRANCAIS DU PETROLE
92852 Rueil-Malmaison Cedex (FR)

(72) Inventeurs:
• Kasztelan, Slavik
92500 Rueil Malmaison (FR)

• Mignard, Samuel
78400 Chatou (FR)
• Harle, Virginie
60260 Lamorlaye (FR)
• Marchal-George, Nathalie
69230 Saint Genis Laval (FR)

(74) Mandataire: Andréeff, François
Département Brevets,
Institut Français du Petrole,
1 & 4 avenue de Bois-Préau
92852 Rueil Malmaison (FR)

(54) **Catalyseur à base d'un metal noble du groupe VIII contenant du silicium, eventuellement du bore et son utilisation en hydrotraitement de charge hydrocarbonées**

(57) L'invention concerne un catalyseur renfermant un support, au moins un métal noble du groupe VIII de la classification périodique du silicium comme dopant, éventuellement du bore, éventuellement au moins un élément du groupe VIB, éventuellement du phosphore, éventuellement au moins un halogène ainsi qu'une préparation particulière de ce catalyseur. L'invention concerne également l'utilisation en hydrotraitement de charges hydrocarbonées de ce catalyseur, et plus particulièrement son utilisation en hydrogénation d'aromatiques d'une coupe gazole.

## Description

La présente invention concerne un catalyseur comprenant au moins un métal noble du groupe VIII (groupe 8, 9 et 10 selon la nouvelle notation de la classification périodique des éléments : Handbook of Chemistry and Physics, 76ième édition, 1995-1996, intérieur 1ère page de couverture), c'est à dire au moins un métal choisi parmi le ruthénium, le rhodium, le palladium, l'osmium, l'iridium et le platine, associé à une matrice poreuse. Le catalyseur est caractérisé en ce qu'il renferme du silicium comme élément dopant. Le catalyseur renferme en outre éventuellement du bore, éventuellement du phosphore, éventuellement au moins un élément du groupe VIB (groupe 6) et éventuellement au moins un élément du groupe VIIA (groupe 17 des halogènes).

La présente invention concerne également les procédés de préparation dudit catalyseur, ainsi que son utilisation dans les procédés de raffinage de coupes pétrolières.

Le catalyseur de la présente invention peut être plus particulièrement utilisé pour l'hydrogénation des aromatiques ou la désaromatisation des aromatiques ou encore la réduction des aromatiques de coupes pétrolières contenant en particulier des composés aromatiques et de faibles quantité de soufre et/ou d'azote et/ou d'oxygène. Les coupes pétrolières et en particulier les bases pour carburants, essences, kérosènes et gazoles contiennent des aromatiques dont il faut de plus en plus réduire la concentration compte tenu de nouvelles ou futures législations limitant les teneurs en aromatiques dans les carburants cités ci-dessus.

Les procédés actuels d'hydrogénation catalytique d'aromatiques dans des solvants ou des coupes pétrolières aromatiques comme les kérosènes et gazoles utilisent des catalyseurs de type métal noble, par exemple le platine déposé sur un support alumine de grande aire spécifique. Cependant, ces métaux sont très sensibles à l'empoisonnement par les composés soufrés et azotés présents dans les charges et il est donc nécessaire de désulfurer et désazoter très profondément ces charges avant de les traiter à l'aide du catalyseur à base de métal noble.

Il est donc important d'obtenir des catalyseurs d'hydrogénation d'aromatiques dans des solvants ou des coupes pétrolières aromatiques comme les kérosènes et gazoles très actifs en présence de soufre et/ou d'azote et/ou d'oxygène afin de diminuer la sévérité de l'hydrotraitement préalable et d'atteindre des taux d'hydrogénation encore plus élevés.

Des catalyseurs à base de platine et de palladium ont notamment été décrits pour leurs propriétés d'hydrogénation des aromatiques. Dans le cas de l'utilisation de support de type alumine (brevet US-A-3 943 053), il est rapporté qu'il est nécessaire de contrôler précisément les teneurs en métal, ainsi que les conditions de préparation. L'utilisation de supports à base de silice-alumine a par ailleurs été rapportée. On peut par exemple citer les brevets US-A-4960505, 5308814 et 5 151 172. Ces catalyseurs sont à base de zéolithe très spécifique avec pour inconvénient un dépôt sélectif des métaux nobles sur la zéolithe.

L'invention concerne donc un catalyseur possédant une phase hydrogénante forte et une acidité modérée. Le catalyseur comprend au moins un métal noble du groupe VIII tel que le ruthénium, rhodium, palladium, osmium, iridium ou platine. Le catalyseur renferme également au moins un support choisi dans le groupe constitué par les supports amorphes ou mal cristallisés. Le catalyseur est caractérisé en ce qu'il renferme en outre comme élément dopant le silicium. Le catalyseur renferme en outre éventuellement du bore, éventuellement du phosphore, éventuellement au moins un élément du groupe VIB, de préférence choisi parmi le molybdène et le tungstène et éventuellement au moins un élément du groupe VIIA, de préférence deux éléments du groupe VIIA et de préférence le chlore et le fluor.

Ledit catalyseur présente par exemple une activité en hydrogénation des hydrocarbures aromatiques en présence de soufre et/ou d'azote et/ou d'oxygène plus importante que les formules catalytiques connues dans l'art antérieur. Sans vouloir être lié par une quelconque théorie, il semble que les propriétés améliorées des catalyseurs de la présente invention est due au renforcement de l'acidité du catalyseur par la présence du silicium introduit comme dopant sur la matrice. Cette acidité accrue induit une meilleure résistance de la phase active du catalyseur à l'empoisonnement par le soufre et/ou l'azote et/ou l'oxygène et donc améliore les propriétés hydrogénantes du catalyseur.

Le catalyseur de la présente invention renferme généralement en % poids par rapport à la masse totale du catalyseur au moins un métal choisi dans les groupes suivants et avec les teneurs suivantes :

- 0,01 à 5%, de préférence de 0,01 à 2% d'au moins un métal noble du groupe VIII, de préférence le platine, le ruthénium et le palladium,
- 0,1 à 97%, de préférence 1 à 95% d'au moins un support choisi dans le groupe constitué par les matrices amorphes et les matrices mal cristallisées, le dit catalyseur étant caractérisé en ce qu'il renferme en outre,
- 0,1 à 40%, de préférence de 0,1 à 30% et de manière encore plus préférée de 0,1 à 20% de silicium, (les % étant exprimés en % d'oxydes), et éventuellement,
- 0 à 20 %, de préférence de 0,1 à 20 % de bore (les % étant exprimés en % d'oxydes),
- 0 à 20%, de préférence de 0,1 à 15% et de manière encore plus préférée de 0,1 à 10% de phosphore, (les % étant exprimés en % d'oxydes),
- 0 à 20%, de préférence de 0,1 à 15% et de manière encore plus préférée de 0,1 à 10% d'au moins un élément du groupe VIIA, de préférence de chlore et de fluor,

- 0 à 3%, de préférence 0,1 à 3% d'au moins un élément choisi dans le groupe VIB, de préférence le molybdène et le tungstène (les % étant exprimés en % d'oxydes).

Les métaux nobles du groupe VIII et les métaux éventuels du groupe VIB du catalyseur de la présente invention peuvent être présents en totalité ou partiellement sous la forme métallique et/ou oxyde et/ou sulfure.

Les catalyseurs selon l'invention peuvent être préparés par toute méthode adéquate. D'une façon préférée, le silicium, éventuellement le bore est introduit sur le catalyseur contenant déjà le support et le ou les métaux nobles du groupe VIII. D'une façon préférée, un catalyseur, est imprégné par une solution, par exemple aqueuse, de silicium et éventuellement par une solution, par exemple aqueuse, de bore (dans n'importe quel ordre) ou est imprégné par une solution, par exemple aqueuse, commune de bore et de silicium, dans le cas où le catalyseur contient du silicium et du bore.

De façon plus particulière, le procédé de préparation du catalyseur de la présente invention comprend les étapes suivantes :

a) on pèse un solide ci-après dénommé le précurseur, renfermant au moins les composés suivants : une matrice poreuse amorphe et/ou mal cristallisée, au moins un élément noble du groupe VIII, éventuellement au moins un élément du groupe VIIA, éventuellement du phosphore, éventuellement du bore, éventuellement au moins un métal du groupe VIB, le tout étant de préférence mis en forme,

b) on imprègne le solide précurseur défini à l'étape a), par au moins une solution contenant du silicium,

c) on laisse reposer le solide humide sous une atmosphère humide à une température comprise entre 10 et 180°C,

d) on sèche le solide humide obtenu à l'étape c) à une température comprise entre 60 et 150°C,

e) on calcine le solide obtenu à l'étape d) à une température comprise entre 150 et 800°C.

Le précurseur défini à l'étape a) ci-dessus peut être préparé selon les méthodes classiques de l'homme du métier.

Le Si et éventuellement le bore, et éventuellement le P, et éventuellement le ou les éléments choisis dans le groupe VIIA des halogènes, de préférence le chlore et le fluor, peuvent être introduits dans le catalyseur à divers niveaux de la préparation et de diverses manières.

L'imprégnation de la matrice est de préférence effectuée par la méthode d'imprégnation dite "à sec", bien connue de l'homme du métier. L'imprégnation peut être effectuée en une seule étape par une solution contenant l'ensemble des éléments constitutifs du catalyseur final.

Le P, B, Si et les éléments choisis parmi les halogènes (groupe VIIA), peuvent être introduits par une ou plusieurs opérations d'imprégnation avec excès de solution sur le précurseur calciné.

Ainsi, par exemple dans le cas préféré où le précurseur est un catalyseur de type platine-palladium supporté sur alumine, il est possible d'imprégner ce précurseur par une émulsion de silicone Rhodorsil E1P de la société Rhône-Poulenc, de procéder à un séchage par exemple à 80°C, de procéder à une calcination par exemple à 350°C pendant 4 heures sous air sec en lit traversé, puis d'imprégner par une solution de fluorure d'ammonium, de procéder à un séchage par exemple à 80°C, et de procéder à une calcination par exemple et de façon préférée sous air sec en lit traversé, par exemple à 500°C pendant 4 heures.

D'autres séquences d'imprégnation peuvent être mises en oeuvre pour obtenir le catalyseur de la présente invention.

Ainsi, dans le cas où le catalyseur contient du bore et du silicium, il est possible d'imprégner dans un premier temps la solution contenant le silicium, de sécher, de calciner et d'imprégner la solution contenant le bore, de sécher et de procéder à une calcination finale. Il est également possible d'imprégner dans un premier temps la solution contenant le bore, de sécher, de calciner et d'imprégner la solution contenant le silicium, de sécher et de procéder à une calcination finale. De manière préférée, il est possible préparer une solution d'au moins un sel de bore tel que le biborate d'ammonium en milieu alcalin et en présence d'eau oxygénée et d'introduire dans la solution un composé du silicium de type silicone et de procéder à une imprégnation dite à sec, dans laquelle on remplit le volume des pores du précurseur par la solution.

Il est aussi possible d'imprégner dans un premier temps le précurseur avec une solution contenant du phosphore, de sécher, de calciner puis d'imprégner le solide obtenu avec une solution contenant du bore, de sécher et de calciner, et enfin d'imprégner le solide obtenu avec la solution contenant le silicium, de sécher et de calciner.

L'imprégnation de l'élément du groupe VIB peut être facilitée par ajout d'acide phosphorique dans les solutions d'heptamolybdate d'ammonium, ce qui permet d'introduire aussi le phosphore de façon à promouvoir l'activité catalytique. D'autres composés du phosphore peuvent être utilisés comme il est bien connu de l'homme du métier.

Dans le cas où les éléments sont introduits en plusieurs imprégnations des sels précurseurs correspondants, une étape de séchage et/ou de calcination intermédiaire du catalyseur est généralement effectuée à une température généralement comprise entre 60 et 350°C.

Le catalyseur de la présente invention renferme un métal noble du groupe VIII tel que ruthénium, rhodium, palladium, osmium, iridium ou platine, et en particulier le platine, le ruthénium et le palladium. D'une manière avantageuse, on utilise les associations de métaux suivantes : platine-palladium, platine-rhodium, platine-ruthénium, palladium-rhodium, palladium-ruthénium, rhodium-ruthénium, les associations préférées sont platine-palladium et palladium-ruthénium. Il est également possible d'utiliser des associations de trois métaux par exemple platine-palladium-rhodium, platine-palladium-ruthénium.

Les sources de métal noble du groupe VIII qui peuvent être utilisées sont bien connues de l'homme du métier. On utilisera les halogénures, par exemple les chlorures, les nitrates, les acides tels que l'acide chloroplatinique, les oxychlorures tels que l'oxychlorure ammoniacal de ruthénium.

De nombreuses sources de silicium peuvent être employées. Ainsi, on peut utiliser l'orthosilicate d'éthyle Si(OEt)$_4$, les silanes, les polysilanes, les siloxanes, les polysiloxanes, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être également ajouté par exemple par imprégnation d'un composé du silicium de type polyalkyl siloxane en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool ou encore dans un mélange eau/ethanolamine.

La source de phosphore préférée est l'acide orthophosphorique $H_3PO_4$, mais ses sels et esters comme phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$ ou de sodium $Na_2SiF_6$, le tétrafluorure de silicium $SiF_4$. Le fluor peut être introduit par exemple par imprégnation d'une solution aqueuse d'acide fluorhydrique, ou de fluorure d'ammonium ou encore de bifluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium

Le catalyseur de la présente invention renferme donc également au moins une matrice minérale poreuse habituellement amorphe ou mal cristallisée. Cette matrice est habituellement choisie dans le groupe formé par l'alumine, la silice, la silice-alumine. On peut choisir également les aluminates. On préfère utiliser des matrices contenant de l'alumine, sous toutes ses formes connues de l'homme du métier, par exemple l'alumine gamma.

On peut aussi avantageusement utiliser des mélanges d'alumine et de silice, des mélanges d'alumine et de silice alumine.

Les catalyseurs obtenus par la présente invention sont mis en forme sous la forme de grains de différentes formes et dimensions. Ils sont utilisés en général sous la forme d'extrudés cylindriques ou polylobés, tels que bilobés, trilobés, polylobés de forme droite ou torsadée, mais peuvent éventuellement être fabriqués et employés sous la forme de poudres concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m²/g, un volume poreux mesuré par porosimétrie au mercure compris entre 0,2 et 1,5 cm³/g et une distribution en taille de pores pouvant être monomodale, bimodale ou polymodale.

Le catalyseur de la présente invention peut être réduit par toute méthode connue de l'homme du métier.

Compte tenu de la grande sensibilité des métaux nobles à l'empoisonnement par le soufre, il est éventuellement approprié d'utiliser une méthode de sulfuration douce du catalyseur. Toutes les méthodes classiques bien connues de l'homme du métier peuvent être employées. Une de ces méthodes consiste à exposer le catalyseur à une charge très légère telle qu'un white-spirit dans lequel on a ajouté un composé soufré tel que le diméthyldisulfure. Le catalyseur est alors sulfuré à une température comprise entre 100 et 800°C, de préférence entre 150 et 600°C.

Le catalyseur de la présente invention peut être plus particulièrement utilisé pour l'hydrogénation des aromatiques ou la désaromatisation ou encore la réduction des aromatiques de coupes pétrolières contenant en particulier des composés aromatiques et de faibles quantités de soufre et/ou d'azote et/ou d'oxygène.

Les charges employées dans le procédé sont des charges aromatiques contenant en général moins de 2000 ppm poids de soufre, moins de 1000 ppm poids d'azote, moins de 1000 ppm poids d'oxygène dont une partie peut-être présente sous la forme d'eau. Ces charges ont été en général préalablement hydroraffinées pour en diminuer les teneurs en soufre, azote et oxygène. Il peut s'agir d'essences, de kérosènes, des gazoles issus de la distillation du brut ou de charges telles que des gazoles sous vide, des résidus de distillation désasphaltés ou non, déjà raffinés ou non. Les charges traitées sont des charges dont le point initial de distillation est supérieur à 80°C et inférieur à 580°C.

Les conditions de l'hydroraffinage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 150°C et souvent comprise entre 200°C et 320°C. La pression est supérieure à 0,1 MPa et souvent comprise entre 1,5 et 10 MPa. Le taux de recyclage d'hydrogène est au minimum de 10 et souvent compris entre 20 et 2000 normaux litres d'hydrogène par litre de charge. La vitesse volumique horaire est comprise en général entre 0,1 et 40 volume de charge par volume de catalyseur et par heure, et de préférence entre 0,1 et 10. Les résultats qui importent au raffineur sont dans ce cas l'activité en hydrogénation d'aromatiques.

Les exemples suivants illustrent la présente invention sans toutefois en limiter la portée.

Exemple 1 : Préparation des supports rentrant dans la composition des catalyseurs de l'invention.

a. SUPPORT S1

Nous avons fabriqué un support à base d'alumine en grande quantité de façon à pouvoir préparer les catalyseurs décrits ci-après à partir du même support mis en forme. Pour ce faire, nous avons utilisé une matrice composée de boehmite tabulaire ultrafine, ou gel d'alumine, commercialisée sous le nom SB3 par la société Condéa Chemie GmbH. Ce gel a été mélangé à une solution aqueuse contenant de l'acide nitrique à 66% (7% poids d'acide par gramme de gel sec), puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi le support S1 sous la forme d'extrudés cylindriques de 1,2 mm de diamètre, ayant une surface spécifique de 243 m$^2$/g, un volume poreux de 0,61 cm$^3$/g et une distribution en taille de pore monomodale centrée sur 10 nm. L'analyse de la matrice par la diffraction des rayons X révèle que celle-ci est composée uniquement d'alumine gamma cubique de faible cristallinité. Ce support est nommé S1.

b. SUPPORT S2

Nous avons ensuite fabriqué en grande quantité un support à base d'alumine contenant du fluor. Pour ce faire, nous avons utilisé l'alumine S1 obtenue ci-dessus et nous l'avons tout d'abord imprégnée avec une solution d'acide chlorhydrique de manière à obtenir un support contenant environ 1% en masse de chlore. Après séchage pendant une nuit à 120°C , les extrudés sont ensuite séchés calcinés à 500°C pendant deux heures sous air sec.

c. SUPPORT S3

Cette alumine chlorée ou support S2 est imprégnée par excès avec une solution d'acide fluorhydrique de manière à obtenir un support fluoré contenant 1,1 % en masse de F. Après imprégnation, les extrudés sont ensuite séchés pendant une nuit à 120°C, puis calcinés à 550°C pendant 2 heures sous air sec. On obtient ainsi le support S3 qui contient, après analyse, 1,05 % en masse de F et 0,70 % en masse de Cl.

d. SUPPORT S4

Nous avons également fabriqué en grande quantité un support à base d'alumine contenant du phosphore et du fluor. Pour ce faire, nous avons utilisé l'alumine S1 et nous l'avons imprégnée à sec avec une solution d'acide phosphorique de manière à obtenir un support phosphoré S4 contenant 8,5 % en masse de $P_2O_5$.

e. SUPPORT S5

Après séchage à 120°C pendant une nuit et calcination sous air sec à 350°C pendant 2 heures, nous avons imprégné le support S4 par excès avec une solution d'acide chlorhydrique de manière à obtenir un support S5 contenant environ 1% en masse de chlore. Après séchage pendant une nuit à 120°C , les extrudés sont ensuite séchés calcinés à 500°C pendant deux heures sous air sec.

f. SUPPORT S6

Cette alumine chlorée et phosphorée S5 est imprégnée par excès avec une solution d'acide fluorhydrique de manière à déposer environ 1% en masse de F. Après imprégnation, les extrudés sont ensuite séchés pendant une nuit à 120°C puis calcinés à 550°C pendant 2 heures sous air sec. On obtient ainsi le support S6 qui contient après analyse, 8,45% en masse de $P_2O_5$, 1,05 % en masse de F et 0,61 % en masse de Cl.

g. SUPPORT S7

Nous avons fabriqué un support contenant de l'alumine et environ 3,2 % en masse d'oxyde de bore B2O3. Pour ce faire, nous avons utilisé une matrice composée de boehmite tabulaire ultrafine, ou gel d'alumine, commercialisée sous le nom SB3 par la société Condéa Chemie GmbH. Ce gel a été mélangé dans un premier temps à une solution aqueuse contenant de l'acide nitrique à 66% (7% poids d'acide par gramme de gel sec) puis malaxé pendant 15 minutes. On ajoute ensuite une solution de biborate d'ammonium et on malaxe encore pendant 5 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C, puis calcinés à 550°C pendant 2 heures sous air humide contenant 7,5% volume d'eau. On obtient ainsi le support S7 sous la forme d'extrudés cylindriques de 1,2 mm de diamètre, ayant une surface spécifique de 263 $m^2$/g, un volume poreux de 0,59 $cm^3$/g et une distribution en taille de pore monomodale centrée sur 9 nm. L'analyse de la matrice par la diffraction des rayons X révèle que celle-ci est composée uniquement d'alumine gamma cubique de faible cristallinité.

h. SUPPORT S8

Nous avons également fabriqué un support contenant de l'alumine et environ 3,0 % en masse de silice SiO2. Pour ce faire, nous avons utilisé une matrice composée de boehmite tabulaire ultrafine, ou gel d'alumine, commercialisée sous le nom SB3 par la société Condéa Chemie GmbH. Ce gel a été mélangé dans un premier temps à une solution aqueuse contenant de l'acide nitrique à 66% (7% poids d'acide par gramme de gel sec) puis malaxé pendant 15 minutes. On ajoute ensuite une émulsion de silicone Rhodorsil EP1® et on malaxe encore pendant 5 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C, puis calcinés à 550°C pendant 2 heures sous air humide contenant 7,5% volume d'eau. On obtient ainsi le support S8 sous la forme d'extrudés cylindriques de 1,2 mm de diamètre, ayant une surface spécifique de 290 $m^2$/g, un volume poreux de 0,52 $cm^3$/g et une distribution en taille de pore monomodale centrée sur 7 nm. L'analyse de la matrice par la diffraction des rayons X révèle que celle-ci est composée uniquement d'alumine gamma cubique de faible cristallinité.

Exemple 2 : Préparation du catalyseur Pt/alumine

Nous avons imprégné par excès de solution le support extrudé S1 de l'exemple 1 par une solution de bis acétylacétonate de platine $Pt(C_5H_9O_2)_2$ dans le toluène. Après filtration, les extrudés sont calcinés à 500°C pendant 2 heures sous air sec. La teneur finale en platine est de 0,61% en masse. Le catalyseur A2 ainsi obtenu, dont les caractéristiques sont regroupées dans le tableau 1, est représentatif des catalyseurs industriels.

Nous avons également imprégné par excès de solution les supports extrudés S7 et S8 de l'exemple 1 par une solution de bis acétylacétonate de platine $Pt(C_5H_9O_2)_2$ dans le toluène. Après filtration, les extrudés sont calcinés à 500°C pendant 2 heures sous air sec. La teneur en platine visée est de 0,60% en masse. Les caractéristiques des catalyseurs A21 et A22 sont regroupées dans le tableau 1.

Exemple 3: Préparation des catalyseurs Pt/alumine+B et/ou Si.

Trois catalyseurs, nommés A31, A32 et A33 ont été préparés par imprégnation à sec d'extrudés du catalyseur Pt/alumine décrit dans l'exemple 2 (catalyseur A2), par une solution aqueuse contenant soit du biborate d'ammonium (catalyseur A31), soit de l'émulsion de silicone Rhodorsil EP1 (catalyseur A32) soit encore un mélange des deux composés précédents (catalyseur A33).

Dans le cas de l'utilisation de biborate d'ammonium, la solubilisation est aidée par l'ajout d'un volume d'eau oxygénée à 30% en volume tel que le rapport molaire $H_2O_2/B_2O_3 = 1,8$. Après maturation à température ambiante dans une atmosphère saturée en eau, les extrudés imprégnés sont séchés une nuit à 120°C, puis calcinés à 500°C pendant 1 heure sous air sec. Les caractéristiques de ces trois catalyseurs sont regroupées dans le tableau 1.

Tableau 1 :

| Catalyseurs Pt contenant du B et/ou du Si | | | | | | |
|---|---|---|---|---|---|---|
| Catalyseur | A2 | A21 | A22 | A31 | A32 | A33 |
| Formule | Pt | PtB | PtSi | PtB | PtSi | PtSiB |
| Support | S1 | S7 | S8 | S1 | S1 | S1 |
| Précurseur | S1 | S7 | S8 | A2 | A2 | A2 |
| Pt (%pds) | 0,61 | 0,59 | 0,60 | 0,59 | 0,60 | 0,58 |
| B2O3 (%pds) | 0 | 3,18 | 0 | 3,20 | 0 | 3,15 |
| SiO2 (%pds) | 0 | 0 | 3,06 | 0 | 2,90 | 2,99 |

Exemple 4 : Préparation du catalyseur précurseur Pt+Cl/alumine.

Nous avons imprégné à sec le support extrudé S1 de l'exemple 1 par une solution aqueuse d'acide hexa-chloroplatinique $H_2PtCl_6.nH_2O$ à laquelle on ajoute de l'acide chlorhydrique de manière à obtenir un catalyseur contenant environ 0,9% en masse de chlore. Après maturation à température ambiante dans une atmosphère saturée en eau, les extrudés imprégnés sont séchés une nuit à 120°C, puis calcinés à 550°C pendant 2 heures sous air sec. On obtient le catalyseur A4 qui est représentatif des catalyseurs industriels et dont les caractéristiques sont regroupées dans le tableau 2.

Nous avons ensuite imprégné de la même manière les supports extrudés S7 et S8 de l'exemple 1 par une solution aqueuse d'acide hexachloroplatinique $H_2PtCl_6.nH_2O$ à laquelle on ajoute de l'acide chlorhydrique de manière à obtenir un catalyseur contenant environ 0,9% en masse de chlore. Après maturation à température ambiante dans une atmosphère saturée en eau, les extrudés imprégnés sont séchés une nuit à 120°C puis calcinés à 550°C pendant 2 heures sous air sec. On obtient les catalyseurs A41 et A42 dont les caractéristiques sont regroupées dans le tableau 2.

Tableau 2 :

| Catalyseurs PtCl contenant du B et/ou du Si | | | | | | |
|---|---|---|---|---|---|---|
| Catalyseur | A4 | A41 | A42 | A51 | A52 | A53 |
| Formule | PtCl | PtClB | PtClSi | PtClB | PtClSi | PtClBSi |
| Support | S1 | S7 | S8 | S1 | S1 | S1 |
| précurseur | S1 | S7 | S8 | A4 | A4 | A4 |
| Pt (%pds) | 0,60 | 0,58 | 0,57 | 0,58 | 0,56 | 0,58 |
| B2O3 (%pds) | 0 | 3,07 | 0 | 3,30 | 0 | 3,12 |
| SiO2 (%pds) | 0 | 0 | 2,98 | 0 | 2,84 | 2,94 |
| Cl (%pds) | 0,96 | 1,04 | 1,09 | 0,98 | 0,95 | 0,93 |

Exemple 5 : Préparation de catalyseurs Pt+Cl/alumine+B et/ou Si.

Un catalyseur A51 a été préparé par imprégnation à sec d'extrudés du catalyseur A4, par une solution d'eau oxygénée à 30% en volume contenant du biborate d'ammonium tel que le rapport molaire $H_2O_2/B_2O_3 = 1,8$. Après maturation à température ambiante dans une atmosphère saturée en eau, les extrudés imprégnés sont séchés une nuit à 120°C, puis calcinés à 500°C pendant 1 heure sous air sec. Les caractéristiques de ce catalyseur sont regroupées dans le tableau 2.

Le catalyseur A52 a été préparé par imprégnation à sec d'extrudés du catalyseur A4, PtCl/alumine, décris ci dessus, par l'émulsion de silicone Rhodorsil EP1. Après maturation à température ambiante dans une atmosphère saturée en eau, les extrudés imprégnés sont séchés une nuit à 120°C, puis calcinés à 500°C pendant 2 heures sous air sec. Les caractéristiques de ce catalyseur sont regroupées dans le tableau 2.

Un catalyseur, nommé A53 a été préparé par imprégnation à sec d'extrudés du catalyseur Pt+Cl/alumine décrit dans l'exemple 4 (catalyseur A4) par une solution aqueuse contenant un mélange de biborate d'ammonium et d'émulsion de silicone Rhodorsil EP1 (catalyseur A53). La solubilisation est aidée par l'ajout d'un volume d'eau oxygénée à 30% en volume tel que le rapport molaire $H_2O_2/B_2O_3=1,8$. Après maturation à température ambiante dans une atmosphère saturée en eau, les extrudés imprégnés sont séchés une nuit à 120°C, puis calcinés à 500°C pendant 1 heure sous air sec. Les caractéristiques de ce catalyseur sont regroupées dans le tableau 2.

Exemple 6 : Préparation du catalyseur précurseur Pt+Cl+F/alumine.

Nous avons imprégné à sec le support extrudé S3 de l'exemple 1 par une solution aqueuse d'acide hexachloroplatinique $H_2PtCl_6.nH_2O$ à laquelle on ajoute de l'acide chlorhydrique de manière à obtenir un catalyseur contenant environ 0,9% en masse de chlore. Après maturation à température ambiante dans une atmosphère saturée en eau, les extrudés imprégnés sont séchés une nuit à 120°C, puis calcinés à 550°C pendant 2 heures sous air sec. Le catalyseur A6 ainsi obtenu, dont les caractéristiques sont regroupées dans le tableau 3, est représentatif des catalyseurs industriels.

Exemple 7 : Préparation du catalyseur Pt+Cl+F+B et/ou Si / alumine.

Le catalyseur A71 a été préparé par imprégnation à sec d'extrudés du catalyseur A6, par une solution d'eau oxygénée à 30% en volume ammoniacale contenant du biborate d'ammonium tel que le rapport molaire $H_2O_2/B_2O_3=1,8$. Après maturation à température ambiante dans une atmosphère saturée en eau, les extrudés imprégnés sont séchés une nuit à 120°C, puis calcinés à 500°C pendant 1 heure sous air sec. Les caractéristiques de ce catalyseur sont regroupées dans le tableau 3.

Le catalyseur A72 a été préparé par imprégnation à sec d'extrudés du catalyseur A6, par une solution aqueuse d'émulsion de silicone Rhodorsil EP1. Après maturation à température ambiante dans une atmosphère saturée en eau, les extrudés imprégnés sont séchés une nuit à 120°C puis calcinés à 500°C pendant 2 heures sous air sec. Les caractéristiques de ce catalyseur sont regroupées dans le tableau 3.

Un catalyseur, nommé A73 a été préparé par imprégnation à sec d'extrudés du catalyseur Pt+Cl+F/alumine décrit dans l'exemple 6 (catalyseur A6), par une solution aqueuse contenant un mélange de biborate d'ammonium et d'émulsion de silicone Rhodorsil EP1 (catalyseur A73). La solubilisation est aidée par l'ajout d'un volume d'eau oxygénée à 30% en volume tel que le rapport molaire $H_2O_2/B_2O_3=1,8$. Après maturation à température ambiante dans une atmosphère saturée en eau, les extrudés imprégnés sont séchés une nuit à 120°C puis calcinés à 500°C pendant 1 heure sous air sec. Les caractéristiques de ce catalyseur sont regroupées dans le tableau 3.

Tableau 3 :

| Catalyseurs PtClF/alumine contenant du B et/ou du Si | | | |
|---|---|---|---|
| Catalyseur | A6 | A71 | A72 | A73 |
| Formule | PtClF | PtClFB | PtClFSi | PtClFSiB |
| Pt (%pds) | 0,57 | 0,57 | 0,56 | 0,55 |
| B2O3(%pds) | 0 | 3,15 | 0 | 3,12 |
| SiO2 (%pds) | 0 | 0 | 2,75 | 2,72 |
| F (%pds) | 1,05 | 1,05 | 0,95 | 0,93 |
| Cl (%pds) | 0,85 | 0,83 | 0,82 | 0,82 |

Exemple 8 : Préparation du catalyseur Pt+Cl+F+P/alumine + B et/ou Si.

On imprégne le support S6 de l'exemple 1 par de l'acide hexachloroplatinique $H_2PtCl_6.nH_2O$ de manière à obtenir un catalyseur intermédiaire de référence A81 contenant du Pt, du Cl, du F et du P. Après séchage à 120°C pendant 12 heures et calcination à 550°C pendant 2 heures on imprégne du biborate d'ammonium (catalyseur A82), ou soit de l'émulsion de silicone Rhodorsil EP1 (catalyseur A83) ou le B et le Si à l'aide d'un mélange des deux composés précédents simultanément (catalyseur A84). Les proportions des divers éléments Pt, Cl, F, B ou Si et les caractéristiques de ces catalyseurs sont résumées dans le tableau 4.

Tableau 4 :

| Catalyseurs PtPFCl/alumine contenant du B et/ou du Si. | | | | |
|---|---|---|---|---|
| Catalyseur | A81 | A82 | A83 | A84 |
| Formule | PtPClF | PtPClFB | PtPFClSi | PtPFClSiB |
| Pt (%pds) | 0,59 | 0,55 | 0,56 | 0,56 |
| P2O5 (%pds) | 8,55 | 8,64 | 8,43 | 8,35 |
| B2O3 (%pds) | 0 | 3,12 | 0 | 3,21 |
| SiO2 (%pds) | 0 | 0 | 2,95 | 7,79 |
| F (%pds) | 0,96 | 0,92 | 0,91 | 0,92 |
| Cl (%pds) | 0,89 | 0,89 | 0,86 | 0,84 |

Exemple 9 : Préparation des catalyseurs contenant un élément du groupe VIB.

A partir du catalyseur A81 contenant déjà le Pt, le F, le Cl et le P, on dépose environ 2,7 % en masse de $MoO_3$, 3,1% de $B_2O_3$ et 2,6% de $SiO_2$ à l'aide d'une imprégnation à sec d'une solution d'heptamolybdate d'ammonium, de biborate d'ammonium et de Rhodorsil E1P. Pour favoriser la mise en solution, on ajoute à la solution de Mo et de B de l'eau oxygénée à 30% en volume de manière à ce que la quantité d'H2O2 réponde à la formule molaire $[H_2O_2]$ =0,5$[MoO_3]$+1,8$[B_2O_3]$. Après séchage à 120°C une nuit et calcination à 500°C pendant 1 heure sous air sec, on obtient le catalyseur A11 dont les teneurs sont indiquées dans le tableau 5.

Exemple 10 : Préparation des catalyseurs Pt+Pd.

On imprégne le support S3 de l'exemple 1 par de l'acide hexachloroplatinique $H_2PtCl_6$ de manière à obtenir un catalyseur contenant 0,3% de Pt et environ 0,9% en masse de chlore. Après séchage et calcination on imprègne du bis acétylacétonate de palladium de manière à obtenir une quantité de palladium de 0,3% en masse. Après séchage à 120°C pendant 12 heures et calcination à 550°C pendant 2 heures on obtient le catalyseur A12. On imprègne ensuite le catalyseur A12 avec le B et le Si simultanément (catalyseur A13). Les proportions des divers éléments Pt, Pd, Cl, F, B ou Si et les caractéristiques de ces catalyseurs sont résumées dans le tableau 5.

Exemple 11 : Préparation des catalyseurs Pt+Pd avec un élément du groupe VIB.

A partir du catalyseur A12 contenant déjà le Pt, le Pd, le F, le Cl et le P, on dépose environ 2,7 % en masse de $MoO_3$, 3,1% de $B_2O_3$ et 2,6% de $SiO_2$ à l'aide d'une imprégnation à sec d'une solution d'heptamolybdate d'ammonium, de biborate d'ammonium et de Rhordorsil E1P. Pour favoriser la mise en solution, on ajoute à la solution de l'eau oxygénée à 30% en volume de manière à ce que la quantité d'H2O2 réponde à la formule molaire $[H_2O_2]$=0,5$[MoO_3]$ +1,8$[B_2O_3]$. Après séchage à 120°C une nuit et calcination à 500°C pendant 1 heure sous air sec, on obtient le catalyseur A14.

De la même manière, à partir du catalyseur A12 contenant déjà le Pt, le Pd, le F, le Cl et le P, on dépose 2,7 % en masse de $WO_3$, 3,1% de $B_2O_3$ et 2,6% de $SiO_2$ à l'aide d'une imprégnation à sec d'une solution de tungstate d'ammonium, de biborate d'ammonium et de Rhodorsil E1P. Pour favoriser la mise en solution, on ajoute à la solution de Mo et de B de l'eau oxygénée à 30% en volume de manière à ce que la quantité d'H2O2 réponde à la formule molaire $[H_2O_2]$=0,5$[WO_3]$+1,8$[B_2O_3]$. Après séchage à 120°C une nuit et calcination à 500°C pendant 1 heure sous air sec, on obtient le catalyseur A15.

Tableau 5 :

| Catalyseur | Catalyseurs PtPFClSiB/alumine contenant du Pd, du Mo ou du W | | | | | | |
|---|---|---|---|---|---|---|---|
| Catalyseur | A11 | A12 | A13 | A14 | A15 | A16 | A17 |
| Formule | Pt<br>PFCl<br>SiB<br>Mo | PtPd<br>PFCl | PtPd<br>PFCl<br>SiB | PtPd<br>PFCl<br>SiB<br>Mo | PtPd<br>PFCl<br>SiB<br>W | PtPd<br>FClSi | PtPd<br>FClB |
| Pt (%pds) | 0,55 | 0,30 | 0,27 | 0,29 | 0,30 | 0,29 | 0,28 |
| Pd (%pds) | 0 | 0,29 | 0,27 | 0,27 | 0,30 | 0,29 | 0,29 |
| P2O5 (%pds) | 8,42 | 8,45 | 8,32 | 8,43 | 8,25 | 0 | 0 |
| B2O3 (%pds) | 3,10 | 0 | 3,05 | 3,15 | 3,08 | 0 | 3,08 |
| SiO2 (%pds) | 2,65 | 0 | 2,55 | 2,70 | 2,75 | 2,75 | 0 |
| F (%pds) | 0,95 | 0,98 | 0,96 | 0,92 | 0,94 | 0,93 | 1,04 |
| Cl (%pds) | 0,83 | 0,88 | 0,86 | 0,90 | 0,86 | 0,89 | 0,89 |
| MoO3 (%pds) | 2,80 | 0 | 0 | 2,72 | 0 | 0 | 0 |
| W O3 (%pds) | 0 | 0 | 0 | 0 | 2,73 | 0 | 0 |

On imprégne le support S3 de l'exemple 1 par de l'acide hexachloroplatinique $H_2PtCl_6.nH_2O$ à laquelle on ajoute de l'acide chlorhydrique de manière à obtenir un catalyseur contenant 0,3% de Pt et environ 0,9% en masse de chlore. Après séchage et calcination on imprégne du bis acétylacétonate de palladium de manière à obtenir une quantité de palladium de 0,3% masse. Après séchage à 120°C pendant 12 heures et calcination à 550°C pendant 2 heures on imprégne ensuite le catalyseur avec une solution aqueuse de Rhodorsil E1P afin de déposer du Si. Après séchage à 120°C pendant 12 heures et calcination à 500°C pendant 1 heure on obtient le catalyseur A16.

On imprégne le support S3 de l'exemple 1 par une solution aqueuse d'acide hexachloroplatinique $H_2PtCl_6.nH_2O$ à laquelle on ajoute de l'acide chlorhydrique de manière à obtenir un catalyseur contenant 0,.3% de Pt et environ 0,9% en masse de chlore. Après séchage et calcination on imprégne de du bis acétylacétonate de palladium de manière à obtenir une quantité de palladium de 0,3% masse. Après séchage à 120°C pendant 12 heures et calcination à 550°C pendant 2 heures on imprégne ensuite le catalyseur par une solution d'eau oxygénée à 30% en volume ammoniacale contenant du biborate d'ammonium tel que le rapport molaire $H_2O_2/B_2O_3=1,8$ afin de déposer du B. Après séchage à 120°C pendant 12 heures et calcination à 500°C pendant 1 heure on obtient le catalyseur A17.

Exemple 12 : Test en hydrogénation d'aromatiques.

Les catalyseurs précédemment décrits ont été comparés en test d'hydrogénation d'un gazole hydrotraité dont les principales caractéristiques sont données dans le tableau suivant :

| Densité à 15°C | 0,901 |
|---|---|
| Soufre | 26 ppm masse |
| Azote total | 7 ppm masse |
| Teneur en aromatiques | 65 % masse |
| Distillation Simulée PI | 145 °C |
| 10% | 211 °C |
| 50% | 278 °C |
| 90% | 349 °C |
| PF | 408 °C |

Le test est mené dans un réacteur pilote isotherme à lit fixe traversé, les fluides circulant de bas en haut. Après séchage in situ à 280°C dans l'unité sous pression d'hydrogène pendant au moins deux heures, on injecte le gazole. Le test d'hydrogénation a été conduit dans les conditions opératoires suivantes :

| Pression totale | 6 MPa |
|---|---|
| Volume de catalyseur | 40 $cm^3$ |
| Température | 280°C |
| Débit d'hydrogène | 20 l/h |
| Débit de charge | 40 $cm^3$/h |

Les performances catalytiques des catalyseurs testés sont données dans le tableau 7 suivant. Elles sont exprimées en activité relative, en posant que celle du catalyseur A4 est égale à 1. L'hydrogénation d'aromatique est une réaction d'ordre 1 et en conséquence l'activité est calculée à l'aide de la formule :

$$A_{HYD} = Ln[ \frac{100}{100-\%HDA} ]$$

La réaction d'hydrodésulfuration est quasi totale puisque les teneurs en soufre des effluents sont toujours inférieure à 0,2 ppm en masse de soufre.

Tableau 7 :

| Activités des catalyseurs en hydrogénation d'un gazole. | | |
|---|---|---|
| Catalyseur | Formule | $A_{HYD}$ relative à A4 |
| A2 | Pt/alumine | 0,1 |
| A21 | Pt/alumine-B | 0,09 |

Tableau 7 : (suite)

| Activités des catalyseurs en hydrogénation d'un gazole. | | |
|---|---|---|
| Catalyseur | Formule | $A_{HYD}$ relative à A4 |
| A22 | Pt/alumine-Si | 0,07 |
| A31 | PtB/alumine | 0,18 |
| A32 | PtSi/alumine | 0,27 |
| A33 | PtSiB/alumine | 0,35 |
| A4 | PtCl/alumine | 1 |
| A41 | PtCl/alumine-B | 0,9 |
| A42 | PtCl/alumine-Si | 1,15 |
| A51 | PtClSi/alumine | 1,45 |
| A52 | PtClB/alumine | 1,12 |
| A53 | PtClBSi/alumine | 1,55 |
| A6 | PtClF/alumine | 2,13 |
| A71 | PtClFB/alumine | 2,21 |
| A72 | PtClFSi/alumine | 2,41 |
| A73 | PtClFSiB/alumine | 2,78 |
| A81 | PtPClF/alumine | 1,99 |
| A82 | PtPClFB/alumine | 2,21 |
| A83 | PtPClFSi/alumine | 2,34 |
| A84 | PtPClFSiB/alumine | 2,85 |
| A11 | PtPClFSiBMo/alumine | 3,01 |
| A13 | PtPdPClFSiB/alumine | 4,06 |
| A14 | PtPdPClFSiBMo/alumine | 4,15 |
| A15 | PtPdPClFSiBW/alumine | 4,25 |
| A16 | PtPdClFSi/alumine | 4,06 |
| A17 | PtPdPClFSB/alumine | 3,06 |

On observe dans le tableau 7 que l'activité en hydrogénation d'aromatique en présence d'une faible quantité de soufre dans le gazole est meilleure lorsque l'on ajoute au catalyseur Pt/alumine du silicium (catalyseur A32), ou quelle est encore meilleure lorsque que l'on ajoute et du bore et du silicium (catalyseur A33). Ces effets positifs sur l'activité en hydrogénation d'aromatique se retrouvent pour la série catalyseurs A81, A82, A83 et A84 ou on observe que l'ajout de Si améliore l'activité du catalyseur contenant Pt, P, Cl et F sur alumine et l'activité est encore meilleure lorsque l'on ajoute B et Si. Enfin on note que les catalyseurs contenant du chlore et/ou du fluor sont meilleurs que ceux qui n'en contiennent pas. L'activité est en général encore meilleure lorsque l'on utilise une composition de deux métaux du groupe VIII tels que le platine et le palladium (catalyseurs A11, A13, A14, A15).

En comparant les catalyseurs A32 et A22, on constate qu'il est bénéfique d'ajouter le bore ou le silicium sur le catalyseur contenant au moins un élément du groupe VIII noble supporté sur une matrice oxyde, plutôt que d'introduire le bore ou le silicium dans le support avant de mettre en forme celui-ci.


**Revendications**

1.  Catalyseur renfermant au moins un métal noble du groupe VIII de la classification périodique des éléments, le dit métal étant déposé sur un support, le dit catalyseur étant caractérisé en ce qu'il comprend du silicium comme élément dopant.

2. Catalyseur selon la revendication 1 renfermant en outre du bore.

3. Catalyseur selon l'une des revendications 1 à 2 renfermant en outre au moins un métal du groupe VIB de la classification périodique des éléments.

4. Catalyseur selon l'une des revendications 1 à 3 renfermant en outre du phosphore.

5. Catalyseur selon l'une des revendications 1 à 4 renfermant en outre au moins un élément du groupe VIIA choisi dans le groupe constitué par le fluor, le chlore, le brome et l'iode.

6. Catalyseur selon l'une des revendications 1 à 5 renfermant en poids par rapport à la masse totale du catalyseur:

    - 0,01 à 5% d'au moins un métal noble du groupe VIII
    - 0,1 à 97% d'au moins un support choisi dans le groupe constitué par les matrices amorphes et les matrices mal cristallisées.
    - 0,1 à 40% de silicium.

7. Catalyseur selon l'une des revendications 1 à 6 renfermant en poids 0,1 à 20 % de bore.

8. Catalyseur selon l'une des revendications 1 à 7 renfermant en poids 0,1 à 3% en poids d'au moins un métal du groupe VIB.

9. Catalyseur selon l'une des revendications 1 à 8 renfermant en outre 0,1 à 20% poids de phosphore.

10. Catalyseur selon l'une des revendications 1 à 9 renfermant 0,1 à 20% poids d'au moins un élément du groupe VIIA.

11. Catalyseur selon la revendication 10 tel que l'élément du groupe VIIA est le chlore.

12. Catalyseur selon l'une des revendications 10 à 11 tel que l'élément du groupe VIIA est le fluor.

13. Procédé de préparation d'un catalyseur selon l'une des revendications 1 à 12, dans lequel une masse catalytique ou précurseur appelée encore précurseur à base d'un support renfermant au moins un métal noble du groupe VIII est imprégnée par au moins une solution à base de silicium et est imprégnée par éventuellement une solution contenant du phosphore, et éventuellement une solution contenant du bore, et éventuellement une solution contenant au moins un élément du groupe VIIA et éventuellement une solution contenant au moins un métal du groupe VIB.

14. Procédé selon la revendication 13 dans lequel les imprégnations du précurseur sont des imprégnations à sec en vue de remplir les pores du précurseur.

15. Procédé selon l'une des revendications 13 à 14, dans lequel :

    a) on sèche et on pèse un solide ci-après dénommé le précurseur, renfermant au moins les composés suivants : une matrice poreuse amorphe et/ou mal cristallisée, au moins un métal noble du groupe VIII, éventuellement du phosphore, éventuellement du bore, éventuellement au moins un élément du groupe VIIA, éventuellement au moins un métal du groupe VIB, le tout étant de préférence mis en forme,

    b) on imprègne le solide précurseur défini à l'étape a), par au moins une solution contenant du silicium.

    c) on laisse éventuellement reposer le solide humide sous une atmosphère humide à une température comprise entre 10 et 80°C,

    d) on sèche le solide humide obtenu à l'étape b) à une température comprise entre 60 et 150°C,

    e) on calcine le solide obtenu à l'étape c) à une température comprise entre 150 et 800°C.

16. Procédé selon l'une des revendications 13 à 15 dans lequel le phosphore, le ou les éléments du groupe VIIA, le ou les métaux du groupe VIB sont introduits par une ou plusieurs opérations d'imprégnation, dans n'importe quel ordre.

**17.** Procédé selon l'une des revendications 13 à 16 dans lequel une étape de séchage et/ou de calcination du catalyseur est effectuée entre chaque imprégnation.

**18.** Utilisation d'un catalyseur selon l'une des revendications 1 à 12 ou préparé selon l'une des revendications 13 à 17, dans un procédé de d'hydroraffinage ou d'hydroconversion de charges hydrocarbonées.

**19.** Utilisation selon la revendication 18 dans un procédé d'hydrogénation des aromatiques présents dans un charge hydrocarbonée à une température supérieure à 150°C, sous une pression supérieure à 0,1 MPa, avec un taux de recyclage d'hydrogène supérieur à 10 et une vitesse volumique horaire comprise entre 0,1 et 40 volume de charge par volume de catalyseur et par heure.

| | Office européen des brevets | RAPPORT DE RECHERCHE EUROPEENNE | Numéro de la demande EP 99 40 1021 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P,X | EP 0 848 992 A (I. F. P.) 24 juin 1998 LA TOTALITÉ DU DOCUMENT AVEC UNE ATTENTION CETTE FOIS TOUTE PARTICULIÈRE PAGE 2, LIGNE 40 --- | 1-19 | B01J23/38 B01J23/68 C10G49/06 C10G45/52 |
| P,X | FR 2 758 278 A (I. F. P.) 17 juillet 1998 * page 14, ligne 11 - page 22, ligne 6 * --- | 1-19 | |
| P,X | US 5 763 721 A (AN-HSIANG WU ET AL.) 9 juin 1998 * le document en entier * --- | 1-4 | |
| X | FR 2 564 006 A (I. F. P.) 15 novembre 1985 * page 6, ligne 25 - page 7, ligne 11 * --- | 1-4 | |
| X | US 4 080 284 A (T. O. MITCHELL) 21 mars 1978 * colonne 6, ligne 57-65 * --- | 1 | |
| A | DATABASE WPI Section Ch, Week 9216 Derwent Publications Ltd., London, GB; Class E36, AN 92-129098 XP002091474 & JP 04 074535 A (TOYOTA JIDOSHA KK) , 9 mars 1992 * abrégé * --- | 1 | DOMAINES TECHNIQUES RECHERCHES (Int.Cl.6) B01J C10G |
| A | US 5 516 740 A (I. A. CODY ET AL.) 14 mai 1996 * colonne 2, ligne 33-67 * --- | 2,4,5 | |
| A | GB 2 063 700 A (CHIYODA CHEMICAL ENGENEERING & CONSTRUCTION CO LTD) 10 juin 1981 * page 11, ligne 10-25 * --- | 2,4,5 | |

-/--

Le présent rapport a été établi pour toutes les revendications

| Lieu de la recherche | Date d'achèvement de la recherche | Examinateur |
|---|---|---|
| LA HAYE | 21 juin 1999 | Devisme, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Office européen
des brevets

**RAPPORT DE RECHERCHE EUROPEENNE**

Numéro de la demande

EP 99 40 1021

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 120 821 A (AKIO IIZUKA ET AL.) 17 octobre 1978 * le document en entier * | 2 | |
| A | EP 0 653 242 A (SCHELL INTERNATIONALE RESEARCH MAATSCHAAPIJ B.V.) 17 mai 1995 * le document en entier * | 3,5 | |

**DOMAINES TECHNIQUES RECHERCHES (Int.Cl.6)**

Le présent rapport a été établi pour toutes les revendications

| Lieu de la recherche | Date d'achèvement de la recherche | Examinateur |
|---|---|---|
| LA HAYE | 21 juin 1999 | Devisme, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03. 82 (P04C02)

**ANNEXE AU RAPPORT DE RECHERCHE EUROPEENNE
RELATIF A LA DEMANDE DE BREVET EUROPEEN NO.**

EP 99 40 1021

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-06-1999

| Document brevet cité au rapport de recherche | | Date de publication | Membre(s) de la famille de brevet(s) | | Date de publication |
|---|---|---|---|---|---|
| EP 848992 | A | 24-06-1998 | JP | 10180106 A | 07-07-1998 |
| FR 2758278 | A | 17-07-1998 | EP | 0855216 A | 29-07-1998 |
| | | | JP | 10211432 A | 11-08-1998 |
| US 5763721 | A | 09-06-1998 | AUCUN | | |
| FR 2564006 | A | 15-11-1985 | AUCUN | | |
| US 4080284 | A | 21-03-1978 | AUCUN | | |
| US 5516740 | A | 14-05-1996 | US | 5200382 A | 06-04-1993 |
| | | | CA | 2081489 A | 16-05-1993 |
| | | | EP | 0547756 A | 23-06-1993 |
| | | | JP | 5212295 A | 24-08-1993 |
| GB 2063700 | A | 10-06-1981 | JP | 1231419 C | 26-09-1984 |
| | | | JP | 56076245 A | 23-06-1981 |
| | | | JP | 59005011 B | 02-02-1984 |
| | | | CA | 1148923 A | 28-06-1983 |
| | | | DE | 3044070 A | 19-06-1981 |
| | | | FR | 2469955 A | 29-05-1981 |
| | | | MX | 170717 B | 09-09-1993 |
| | | | NL | 8006474 A | 01-07-1981 |
| | | | US | 4367164 A | 04-01-1983 |
| | | | US | 4399026 A | 16-08-1983 |
| US 4120821 | A | 17-10-1978 | JP | 998310 C | 30-05-1980 |
| | | | JP | 52027086 A | 01-03-1977 |
| | | | JP | 54037073 B | 13-11-1979 |
| EP 653242 | A | 17-05-1995 | AU | 692473 B | 11-06-1998 |
| | | | AU | 7763494 A | 01-06-1995 |
| | | | BR | 9404315 A | 04-07-1995 |
| | | | CA | 2134906 A | 05-05-1995 |
| | | | CZ | 9402679 A | 12-07-1995 |
| | | | FI | 945166 A | 05-05-1995 |
| | | | HU | 72003 A | 28-03-1996 |
| | | | JP | 7185353 A | 25-07-1995 |
| | | | ZA | 9408620 A | 27-06-1995 |

FPO FORM P0460

Pour tout renseignement concernant cette annexe : voir Journal Officiel de l'Office européen des brevets, No.12/82